# EUROPÄISCHE PATENTSCHRIFT

(11) **EP 2 184 162 B1**
(45) Veröffentlichungstag und Bekanntmachung des Hinweises auf die Patenterteilung: **01.08.2012**
(21) Anmeldenummer: 09013730.8
(22) Anmeldetag: 31.10.2009
(51) Int. Cl.: B32B 27/12, B32B 27/18, B32B 27/32, B65D 65/40, B65D 81/26, C08G 18/00, C09J 7/02, C23F 11/02, D04H 13/00

(54) **VERPACKUNGSMATERIAL FÜR KORROSIONSANFÄLLIGE GEGENSTÄNDE AUS METALL**
PACKAGING MATERIAL FOR METALLIC OBJECTS SUSCEPTIBLE TO CORROSION
MATÉRIAU D'EMBALLAGE POUR OBJETS EN MÉTAL SUJETS À LA CORROSION

(30) Priorität: 07.11.2008 DE 102008056724; 10.12.2008 DE 102008061253; 09.03.2009 DE 102009013959
(43) Veröffentlichungstag der Anmeldung: 12.05.2010
(60) Teilanmeldung: 12156923.0
(73) Patentinhaber: Nordenia Deutschland Gronau GmbH, 48599 Gronau (DE)
(72) Erfinder: Leuders, Josef, 48599 Gronau-Epe (DE); Wachs, Tilo, 53424 Remagen-Bandorf (DE)
(74) Vertreter: Albrecht, Rainer Harald

(56) Entgegenhaltungen:
- EP-A1- 1 264 682
- EP-A2- 0 825 019
- WO-A1-03/103957
- DE-A1-102006 005 666

## Beschreibung

Die Erfindung betrifft ein Verpackungsmaterial für korrosionsanfällige Gegenstände aus Metall.

Das Verpackungsmaterial besteht aus einer die Verpackungsaußenseite bildenden Kunststofffolie, einer innenseitigen Schicht und einer die Kunststofffolie mit der innenseitigen Schicht verbindenden Klebstoffschicht, wobei die Klebstoffschicht einen flüchtigen Korrosionsinhibitor enthält und wobei die innenseitige Schicht im Vergleich zur Kunststofffolie an der Verpackungsaußenseite eine hohe Durchlässigkeit für den Korrosionsinhibitor aufweist. Die innenseitige Schicht kann aus einer textilen Schicht, einer perforierten Folie oder einer Folie aus einem Polymer, welches eine große Permeabilität für den Korrosionsinhibitor aufweist, bestehen. Bei dem flüchtigen Korrosionsinhibitor, nachfolgend auch VCI (Volatile Corrosion Inhibitor) genannt, handelt es sich um Verbindungen, die neben korrosionsschützenden Eigenschaften auch einen Dampfdruck besitzen. Aufgrund der Verdampfungseigenschaften geht der Korrosionsinhibitor in die Gasphase über und setzt sich auf der Metalloberfläche des zu schützenden Gegenstandes als Film ab. Die Anziehung der VCI-Moleküle ist stärker als die von Wassermolekülen, so dass sich auf der Metalloberfläche eine Schutzschicht bildet. Die Anwesenheit des in die Gasphase übergegangenen Korrosionsschutzinhibitors hemmt die zur Korrosion führenden elektrochemischen Prozesse. Auf diese Weise wird innerhalb der Verpackung ein temporärer Korrosionsschutz herbeigeführt, dessen Wirkungsdauer über mehrere Monate anhält. Als flüchtiger Korrosionsinhibitor sind beispielsweise Nitrit-Verbindungen oder Aminsalze, z. B. Dicyclohexylamin-Benzoat und Diethanolamin-Nitrit, einsetzbar (GB 1 048 770). Nach dem Entfernen der VCI-Verpackung entweichen die VCI-Komponenten rückstandsfrei von der Metalloberfläche, so dass keine Nachreinigung der Metallgegenstände vor ihrer weiteren Verwendung erforderlich ist. Das ist ein entscheidender Vorteil einer VCI-haltigen Verpackung gegenüber anderen Methoden des temporären Korrosionsschutzes, wie z. B. der Beölung/Befettung von Bauteilen. Letztere erfordern in jedem Fall eine Entfernung des Korrosionsschutzöls/Fettes von den Teilen. Dies erfolgt in der Regel mit organischen Lösungsmitteln oder sauren bzw. alkalischen Entfettungslösungen und stellt zusätzliche Prozessschritte und eine Gesundheits- und Umweltgefährdung dar.

Es ist bekannt, feste oder flüssige VCI-Wirkstoffe oder VCI-Wirkstoffgemische auf Verpackungsmaterialien wie Kunststofffolien, Papieren, Pappen, Schaumstoffen, Verbundmaterialien und dergleichen aufzubringen oder einzuarbeiten. Hierbei kommen Verfahren wie das Tränken, Besprühen, Beschichten oder Einarbeiten mittels Extrusion sowie ähnliche Methoden zum Einsatz. Der Vorteil von VCI-haltigen Papieren oder Pappen ist die große Aufnahmefähigkeit für die Wirkstoffe. Papiere und Pappen können ein Vielfaches der Wirkstoffmenge aufnehmen, die in Kunststofffolien einarbeitbar ist. Allerdings geben sie die Wirkstoffe sehr viel schneller ab, als letztere. Das bedeutet, dass VCI-getränkte Papiere und Pappen zwar einen schnellen und zunächst wirksamen Korrosionsschutz ermöglichen, der jedoch nicht lange anhält. Kunststofffolien und andere Polymerträger geben ihre VCI-Wirkstoffe sehr viel langsamer ab. Deshalb erzielen sie keine so schnelle Korrosionsschutzwirkung wie Papier, haben dafür in der Regel aber eine wesentlich bessere Langzeitwirkung.

In industriellen Verpackungsprozessen sind beide Wirkungsweisen bedeutsam. Verpackte Anlagenteile oder Werkstücke kommen üblicherweise bereits nach wenigen Stunden zum Transport. Das heißt, sie werden unter Umständen ohne längere Konditionierungszeit für die VCI-Komponenten den Umgebungsbedingungen in Transportcontainem auf Lastkraftwagen und Schiffen unterworfen. Hier ist ein schneller Korrosionsschutz der Teile erforderlich. Bei langer Transport- oder Lagerungsdauer ist wiederum ein lang anhaltender Korrosionsschutz notwendig. In der Praxis werden daher häufig Materialkombinationen zum temporären Korrosionsschutz eingesetzt. So kommen z. B. VCI-Folienumverpackungen in Kombination mit eingelegten VCI-Papieren oder VCI-Schäumen zum Einsatz. Auch die gemeinsame Anwendung von Beölung/Befettung der zu schützenden Teile und VCI-Folienumverpackungen ist üblich. Beide Verfahren haben jedoch Nachteile. Die eingelegten Papiere können durch eindringenden Wasserdampf durchnässen und dann auf den Metallteilen zum dauerhaften Feuchtigkeitsspender werden, was Korrosion hervorruft. Die Kombination aus Korrosionsschutzölen/Fetten und VCI-Umverpackungen kann zu undefinierten Bedingungen auf den Metallteilen und sogar zum Aufheben des Korrosionsschutzes führen. Die gemeinsame Anwendung unterschiedlicher VCI-Verpackungsmaterialien hat einen weiteren entscheidenden Nachteil. Unter Umständen kann es durch Reaktionen der unterschiedlichen VCI-Komponenten zur Bildung von Gefahrstoffen wie z. B. N-Nitrosaminen kommen. Letzte stark krebserzeugende Substanzen bilden sich bei gemeinsamer Anwendung Nitrit- und sekundär-Amin-haltiger Produkte.

Ein Verpackungsmaterial mit den eingangs beschriebenen Merkmalen ist aus EP 0 825 019 A2 bekannt. Zur Verklebung der verpackungsaußenseitigen Kunststofffolie mit einer innenliegenden textilen Schicht wird ein Hotmelt-Klebstoff verwendet. Der flüchtige Korrosionsinhibitor muss im schmelzeflüssigen Zustand mit dem Klebstoff vermischt werden. Die Mischung aus Hotmelt-Klebstoff und Korrosionsinhibitor muss ferner bei der Verarbeitung, das heißt, zur Herstellung des Kaschierverbundes, erneut aufgeheizt werden. In beiden Verfahrensschritten geht ein großer Teil des flüchtigen VCI-Wirkstoffes verloren. Es sind Arbeitsschutzmaßnahmen notwendig, da die als flüchtige Korrosionsinhibitor geeigneten Substanzen gesundheitsbedenklich sind. Des Weiteren hat das Verpackungsmaterial den zuvor erläuterten Nachteil von VCI-haltigen Kunststofffolien, dass der Korrosionsschutz sich verhältnismäßig langsam aufbaut.Vor diesem Hintergrund liegt der Erfindung die Aufgabe zugrunde, ein Verpackungsmaterial mit Korrosionsschutzwirkung bereitzustellen, welches nur den Zusatz von kleinen Mengen eines Korrosionsinhibitors erfordert und ohne besondere Arbeitsschutzvorkehrungen hergestellt werden kann. Bei der Verwendung als Verpackung für metallische Gegenstände soll sich die Korrosionsschutzwirkung schnell aufbauen und ferner ein Langzeitschutz gewährleistet sein.

Gegenstand der Erfindung und Lösung dieser Aufgabe ist ein Verpackungsmaterial nach Anspruch 1.

Die Klebstoffschicht ist erfindungsgemäß von einem chemisch abbindenden Reaktionsklebstoff gebildet. Chemisch abbindende Reaktionsklebstoffe, die im Rahmen der erfindungsgemäßen Lehre eingesetzt werden, sind bei Temperaturen bis etwa 80° C verarbeitbar. Vorzugsweise werden chemisch abbindende Reaktionsklebstoffe verwendet, die bei niedrigeren Temperaturen, insbesondere Temperaturen bis 60° C, verarbeitet werden können. Besonders bevorzugt sind chemisch abbindende Reaktionsklebstoffe, die bei Raumtemperatur oder leicht erhöhter Temperatur aushärten und mit einer Temperatur bis 40° C verarbeitet werden. Der Korrosionsinhibitor kann bei den vorgenannten Temperaturen kurz vor dem Kaschiervorgang in den Kaschierklebstoff eingemischt werden, wobei nur geringe Mengen des flüchtigen Korrosionsinhibitors in die Gasphase übergehen, so dass besondere Arbeitsschutzmaßnahmen nicht notwendig sind. Vorteilhaft ist ferner, dass lediglich Kaschierwalzen und Klebstoffwannen mit den gesundheitsbedenklichen Substanzen verunreinigt werden und sich diese Apparateteile nach der Kaschierung leicht reinigen lassen.

Die innere und äußere Oberfläche der Klebstoffschicht ist erfindungsgemäß durch eine Vielzahl von Gasbläschen vergrößert. Der Klebstoff enthält dabei im Inneren eine Vielzahl kleinster Gasbläschen mit einer Ausdehnung im Mikrometerbereich bis Nanometerbereich. Diese Gasbläschen können durch eine chemische Reaktion mit Gasbildung bei der Aushärtung des Klebstoffes erzeugt werden. Grundsätzlich ist aber auch das Einbringen, die gleichmäßige Verteilung und gegebenenfalls Volumenvergrößerung von kleinsten Gasblässchen im Klebstoff durch physikalische Verfahren, wie beispielsweise die Erzeugung eines Unterdrucks, möglich. In Betracht kommt auch die Zumischung von gas- bzw. schaumbildenden Zusätzen. Die große Oberfläche des Klebstoffschaumes bewirkt eine sehr schnelle und effektive Abgabe eines Teils der VCI-Wirksubstanzen. Dies führt zu einem schnell aufgebauten VCI-Korrosionsschutz der verpackten Metallgegenstände. Gleichzeitig hat der ausgehärtete Klebstoff jedoch auch die lang andauernde Depotwirkung von VCI-Kunststofffolien, so dass noch nach einem Zeitraum von mehreren Tagen bis Wochen eine genügend große Menge VCI-Wirkstoff für den Korrosionsschutz der verpackten Metallbauteile freigesetzt wird.

Die für die Abgabe der VCI-Wirksubstanzen wirksame Oberfläche der Klebstoffschicht kann auch dadurch vergrößert werden, dass als innenseitige Schicht ein Material ausgewählt wird, welches teilweise in die Klebstoffschicht eindringt. Vorteilhaft ist es insbesondere, wenn das in die Klebstoffschicht eindringende Material der Innenschicht so strukturiert ist, dass zwischen dem Material der Innenschicht und der Klebstoffschicht Kapilarkräfte wirksam werden. Gemäß einer bevorzugten Ausführung der Erfindung ist die innenseitige Schicht als textile Schicht ausgebildet, deren Fasern teilweise in die Oberfläche der Klebstoffschicht eindringen und auf diese Weise die Oberfläche der Klebstoffschicht vergrößern. Zum einen ist die Grenzfläche zwischen der Klebstoffschicht und der textilen Schicht nicht glatt. Des Weiteren kann z. B. durch REM/ Mikroskopaufnahmen beobachtet werden, dass sich der Klebstoff in Folge kapilarer Kräfte an einzelnen Fasern hochzieht, was ebenfalls zu einer Vergrößerung der für die Abgabe der VCI-Wirksubstanzen wirksamen Oberfläche der Klebstoff beiträgt.

Für die Korrosionsschutzwirkung des Verpackungsmaterials werden nur kleine Mengen des Korrosionsinhibitors benötigt. Die Kunststofffolie bildet eine wirksame Sperrschicht und stellt sicher, dass die Wirksubstanz nahezu ausschließlich in den von einer Verpackung eingeschlossenen Raum übergeht. Aufgrund des geringen Anteils des Korrosionsinhibitors in der Klebstoffschicht wird die Kleberhaftung nicht beeinträchtigt.

Als Reaktionsklebstoff kann ein Einkomponenten-Reaktionsharzklebstoff verwendet werden, der bei Zutritt von Luftfeuchtigkeit auspolymerisiert. Bevorzugt ist ein lösungsmittelfreier PUR-Klebstoff auf Basis aliphatischer oder aromatischer Isocyanate. Durch einen Wasserzusatz, der mit der VCI-Wirksubstanz der Klebstoffmasse zugeführt werden kann, kann die mit einer Gasbildung verbundene Reaktion und damit auch der Anteil, die Verteilung und die Größe der in der ausgehärteten Klebstoffschicht enthaltenen Gasbläschen beeinflusst werden. Bezogen auf das Gesamtgewicht von VCI-Wirksubstanz und Wasser beträgt der Wassergehalt beispielsweise zwischen 0,2 Gew.-% und 7 Gew.-%, vorzugsweise zwischen 0,5 Gew.-% und 3 Gew.-% Wasser. Vorzugsweise werden die Reaktionsbedingungen so eingestellt, dass die Struktur des ausgehärteten Klebstoffes einem aufgeschäumten Kunststoff gleicht. Dabei weist die ausgehärtete Klebstoffschicht eine Schichtdicke auf, die das zweifache bis fünffache der Dicke des applizierten ungeschäumten Klebstoffes beträgt. Schließlich ist auch eine Mischung mehrerer VCI-Wirksubstanzen möglich. Als VCI-Wirksubstanzen sind unter anderem Verbindungen primärer, sekundärer oder tertiärer Amine oder Nitritverbindungen geeignet.

Im Rahmen der Erfindung soll es aber nicht ausgeschlossen sein, dass auch lösemittelbasierte Reaktionsklebstoffe und Zweikomponenten-Reaktionsharzklebstoffe verwendet werden.

Die Klebstoffschicht wird zweckmäßig mit einem Auftragsgewicht von 1 g/m² bis 10 g/m² bezogen auf die Fläche des Verpackungsmaterials appliziert, wobei eine Menge von 2 bis 6 g/m² bevorzugt ist.

Der Korrosionsschutzinhibitor ist erfindungsgemäß in einer Menge von 0,1 g/m² bis 5 g/m², bezogen auf die Fläche des Verpackungsmaterials, in der Klebstoffschicht enthalten. Er ist vorzugsweise mit dem Reaktionsklebstoff gleichmäßig vermischt. Bezogen auf das Gesamtgewicht von Klebstoff und VCI-Wirksubstanz beträgt der Anteil der VCI-Wirksubstanz vorzugsweise zwischen 2 und 20 Gew.-%, besonders bevorzugt zwischen 2 und 10 Gew.-%.

Die Kunststofffolie und die innenseitige Schicht können durch einen gleichmäßigen Auftrag der Klebstoffschicht flächig miteinander verbunden sein. Im Rahmen der Erfindung liegt es aber auch, dass die Klebstoffschicht ein Muster aus Klebeflächen und klebstofffreien Flächen bildet und beispielsweise punktförmig, streifenförmig, gitterförmig und dergleichen im Kontaktbereich zwischen Kunststofffolie und der textilen Schicht vorliegt.

Die Kunststofffolie besteht aus einem Polymer, welches eine Barriere gegen eine Migration des Korrosionsinhibitors bildet. Die Migration des Klebstoffes im Polymer ist abhängig von der Löslichkeit des Wirkstoffes im Polymer sowie der Diffusionsgeschwindigkeit. Die Migration ist mindestens um den Faktor 5, vorzugsweise um mehr als den Faktor 10, kleiner als die Migration der Wirksubstanz in der Klebstoffschicht. Für die Kunststofffolie kommen eine Vielzahl üblicher Polymere in Betracht. Vorzugsweise besteht die Kunststofffolie aus Polyolefin, insbesondere Polyethylen, oder einem Polyolefin-Copolymer. Die Kunststofffolie kann ferner mehrschichtig ausgebildet sein und eine Sperrschicht mit einem hohen Diffusionswiderstand gegenüber dem Korrosionsinhibitor aufweisen, während eine oder mehrere weitere Schichten der Folie und dem Verbundstoff gewünschte Verarbeitungs- und Gebrauchseigenschaften, z. B. Dehnungseigenschaften, Siegelfähigkeit und dergleichen, verleihen. Um eine sehr hohe Barrierewirkung zu erzielen, kann die Kunststofffolie mit einer dünnen Metallschicht bedampft sein. Bei einer mehrschichtigen Ausgestaltung kann neben dem Bedampfen einer der Schichten auch die Einbindung einer Metalllage als Barriere vorgesehen sein. Unabhängig davon, ob die Kunststofffolie ein- oder mehrschichtig ausgebildet ist, weist sie zweckmäßig eine Dicke zwischen 10 µm und 120 µm auf. Besonders bevorzugt ist eine Dicke zwischen 20 µm und 50 µm.

Die der Klebstoffschicht zugewandte Seite der Kunststofffolie kann eine durch Vorbehandlung, insbesondere Corona-Vorbehandlung, modifizierte Oberflächenstruktur zur Verbesserung der Klebstoffhaftung aufweisen.

Die innenseitige Schicht ist eine textile Schicht. Diese bildet eine durchlässige Schicht für die in die Gasphase übergegangenen Anteile des Korrosionsinhibitors und gewährleistet einen mechanischen Schutz des Verpackungsgutes. Die textile Schicht weist vorzugsweise eine weiche und/oder flauschige Oberfläche auf. Die textile Schicht besteht zweckmäßig aus einem Vliesstoff aus Polymerfasern, wobei als Vliesstoff ein Spinnvlies, ein Meltblownvlies oder eine Kombination aus Spinnvlies und Meltblownvlies geeignet sind. Die textile Schicht kann ferner aus einem Gewebe, Gewirke oder Gestricke bestehen. Das erfindungsgemäße Verpackungsmaterial kann als Rollenware gefertigt und mit handelsüblichen Folienschweißgeräten weiterverarbeitet werden. Aus dem Verpackungsmaterial können Beutel, Säcke, Hauben und dergleichen gefertigt werden. Wenn die Kunststofffolie und das textile Material aus gleichen Polymeren, z. B. Polyolefinen gefertigt sind, ist das Verpackungsmaterial recyclebar. Aufgrund der geringen Anteile des Korrosionsinhibitors ist das Recyceln unproblematisch. Bei einer innenseitigen Schicht aus textilem Material ergibt sich auch der Vorteil, dass Flüssigkeit, die sich an der innenseitigen Schicht ansammelt, beispielsweise Kondenswasser, zu einem gewissen Maße aufgenommen werden kann. Dadurch kann die Ausbildung eines durchgängigen Flüssigkeitsfilms an der innenseitigen Schicht und entsprechend eine erhöhte Korrosionsneigung des verpackten Gegenstandes vermieden werden.

Das erfindungsgemäße Verpackungsmaterial eignet sich zum Verpacken und zum Schutz von metallischen Gegenständen aus Stahl, Edelstahl, Aluminium, Kupfer, Messing und dergleichen und kann beispielsweise als Verpackungsmaterial für spanend bearbeitete Maschinenteile, Maschinen und Apparate, Fahrzeuge, Bleche und andere Teile für die Stahlindustrie verwendet werden. Aufgrund der geringen Anteile des Korrosionsinhibitors können auch Maschinen für die Lebensmittelindustrie verpackt werden.

Umverpackungen aus dem erfindungsgemäßen Verpackungsmaterial gewährleisten einen schnellen Aufbau eines vollständigen Korrosionsschutzes metallischer Werkstoffe über die Gasphase. Dies wurde bisher nur durch den Einsatz von VCI-Papieren bzw. Pappen erreicht. Ferner wird auch in entsprechenden lose anliegenden VCI-haltigen Verpackungen, wie z. B. Folienbeuteln, ein schneller und guter Korrosionsschutz der verpackten Metallteile erzielt. Das erfindungsgemäße Verpackungsmaterial gewährleistet darüber hinaus auch eine lange anhaltende hervorragende Korrosionsschutzwirkung selbst bei Kondenswasserbildung direkt auf den verpackten Metalloberflächen, z. B. bei langen Containertransporten über See. Das erfindungsgemäße Verpackungsmaterial vereinigt in sich somit die Vorteile von VCI-Papieren und VCI-Folien gleichermaßen ohne deren Nachteile aufzuweisen. Es muss nur noch ein einziges Verpackungsmaterial für viele verschiedene Anwendungsfälle eingesetzt werden. Kombinationen verschiedener VCI-Materialien mit den entsprechenden zuvor genannten Nachteilen entfallen.

Die Gesamtdicke des Verpackungsmaterials liegt typischerweise zwischen 70 und 200 µm, vorzugsweise zwischen 80 und 150 µm.

### Ausführungsbeispiele

### Beispiel 1:

Das Ausführungsbeispiel bezieht sich auf einen Verbundstoff mit einer 38 µm dicken Polyethylenfolie und einem Vliesstoff mit einem Flächengewicht von 17 g/m².

Die Polyethylenfolie besteht aus einer Mischung aus PE-MD und PE-LD und kann übliche Zusätze, z. B. bis zu 10 Gew.-% Titandioxid zur Weißeinfärbung, enthalten. Der Vliesstoff besteht aus einem Spinnvlies aus Polypropylen.

Die Polyethylenfolie wird extrudiert und auf der Kaschierseite mit Coronaentladungen vorbehandelt. Als Klebstoff für die Herstellung des Kaschierverbundes wird ein einkomponentiger, wasseraushärtender Polyurethanklebstoff auf Basis aromatischer Polyisocyanate eingesetzt.

Als Korrosionsinhibitor wird das handelsübliche Produkt VCI 9000 (Grofit Plastics) verwendet. Es liegt als Flüssigkeit vor, weist einen Siedepunkt von ca. 200° C auf und hat bei Raumtemperatur (20° C) einen Dampfdruck von weniger als 0,01 hPa. Der Korrosionsinhibitor wird mit dem flüssigen Klebstoff durch Einrühren vermischt. Die Mischung aus Klebstoff und Korrosionsinhibitor enthält etwa 10 Gew.-% des Korrosionsinhibitors. Die aus Klebstoff und Korrosionsinhibitor bestehende Mischung wird mit einem Auftragsgewicht von etwa 2 g/m² auf die Folie flächig aufgetragen, bevor das Nonwoven aufgebracht und der Verbund fertig gestellt wird. Im Ausführungsbeispiel ergibt sich folglich eine Auftragsmenge des Korrosionsinhibitors von lediglich 0,2 g/m². Damit wird eine ausreichende Korrosionsschutzwirkung erzielt.

### Beispiel 2:

Für den temporären Korrosionsschutz von unlegierten Baustahlteilen wurde ein Verbund aus einer 38 µm dicken Polypropylenfolie und einem 40 µm dicken Kunststoff-Vlies (Nonwoven) mit einem modifizierten, VCI-haltigen Klebstoff verklebt. Zur Verklebung wurde ein luftfeuchtigkeitshärtender 1-K-Polyurethanklebstoff (1-K-PUR) verwendet, in den eine VCI-Komponente eingearbeitet wurde.

Der luftfeuchtigkeitshärtende 1-K-PUR-Klebstoff wurde direkt vor der Applikation auf die Polypropylenfolie mit 4 Gew.-% einer chemischen Verbindung aus Ethanolamin und einer Carbonsäure (Carboxylat und Amid) versetzt und innig vermischt. Die zugesetzte chemische Verbindung (VCI-Wirksubstanz) enthielt ca. 2 Gew.-% Wasser. Dieser Wasseranteil führt direkt nach der Applikation des modifizierten Klebstoffes auf der Kunststofffolie zur Bildung von Kohlendioxid (CO₂) im Klebstoff. Dies resultierte in der Bildung kleinster Gasbläschen im Klebstoff und in geringfügigem Aufschäumen des Klebstoffes während und nach der Verklebung des Vlieses mit der Polypropylenfolie. Die Schichtdicke der applizierten Klebstoffschicht erhöhte sich dadurch von ca. 10 bis 20 µm im ungeschäumten, fluiden Zustand auf ca. 50 bis 60 µm im ausgehärteten Zustand. Rasterelektronenmikroskopische Aufnahmen der ausgehärteten Klebstoffschicht zeigten eine Vielzahl kleiner und kleinster Bläschen im Mikrometer- bis Nanometerbereich. Die Struktur des ausgehärteten Klebstoffes glich morphologisch einem aufgeschäumten Kunststoff.

Aus dem so hergestellten VCI-haltigen Verbundmaterial wurden mittels eines Folienschweißgerätes Folienbeutel hergestellt. In diese wurden Kunststoffrahmen eingebracht, in die wiederum Stahlproben (Bleche und Zylinder) aus unlegiertem, korrosionsanfälligem Baustahl fest eingesetzt waren. Anschließend wurden die Beutel dicht verschweißt.

Die Verpackungen wurden nach einer Konditionierungszeit von 5 bis 20 Stunden in Klimakammern belastet. Es kamen zyklische Wechsel zwischen Raumtemperatur und 98 % relativer Luftfeuchtigkeit sowie 55° C und 93 % relativer Luftfeuchtigkeit zur Anwendung. Im Gegensatz zu gleichermaßen hergestellten und belasteten Blindproben ohne VCI-Wirkstoffen zeigten die VCI-haltigen Verpackungen auch nach mehreren Tagen Belastung keine Korrosionsstellen auf den Stahlproben. Selbst bei von Anfang an erzwungener Wasserkondensation auf der Stahloberfläche zeigte diese, im Gegensatz zu stark korrodierten Blindproben ohne VCI, auch nach mehreren Tagen Belastung keine Korrosion.

Als korrosionsanfällige Metallgegenstände wurden Bleche des kaltgewalzten unlegierten Baustahls DC 03, Werkstoff-Nummer 1.0347 (Q-Panels, Firma Pausch Messtechnik GmbH, Haan) sowie geschliffene zylinderförmige Probekörper aus dem unlegierten beruhigten Stahl S235JRG2, Werkstoff-Nummer 1.0038 (Rundstabmaterial, Firma ThyssenKrupp Schulte GmbH, Radebeul) verwendet.

## Patentansprüche

1. Verpackungsmaterial für korrosionsanfällige Gegenstände aus Metall, bestehend aus einer die Verpackungsaußenseite bildenden Kunststofffolie, einer innenseitigen textilen Schicht und einer die Kunststofffolie mit der innenseitigen Schicht verbindenden Klebstoffschicht, wobei die Klebstoffschicht einen flüchtigen Korrosionsinhibitor enthält und wobei die innenseitige Schicht im Vergleich zur Kunststofffolie an der Verpackungsaußenseite eine hohe Durchlässigkeit für den Korrosionsinhibitor aufweist, **dadurch gekennzeichnet, dass** die Klebstoffschicht von einem chemisch abbindenden Reaktionsklebstoff gebildet ist, wobei die Oberfläche der Klebstoffschicht durch eine Vielzahl von Gasbläschen vergrößert ist und/oder eine für die Abgabe des Korrosionsinhibitors wirksame Oberfläche der Klebstoffschicht dadurch vergrößert ist, dass die Fasern der Innenschicht teilweise in die Oberfläche der Klebstoffschicht eindringen und sich Klebstoff in Folge kapillarer Kräfte an einzelnen Fasern hochzieht, und dass der Korrosionsinhibitor in einer Menge von 0,1 g/m² bis 5 g/m² bezogen auf die Fläche des Verpackungsmaterials in der Klebstoffschicht enthalten ist.

2. Verpackungsmaterial nach Anspruch 1, **dadurch gekennzeichnet, dass** die Gasbläschen einen Durchmesser im Mikrometerbereich bis Nanometerbereich aufweisen.

3. Verpackungsmaterial nach Anspruch 1 oder 2, **dadurch gekennzeichnet, dass** die Gasbläschen durch eine chemische Reaktion mit Gasbildung bei der Aushärtung des Klebstoffes erzeugt worden sind.

4. Verpackungsmaterial nach einem der Ansprüche 1 bis 3, **dadurch gekennzeichnet, dass** die Struktur des ausgehärteten Klebstoffes einem aufgeschäumten Kunststoff gleicht.

5. Verpackungsmaterial nach Anspruch 4, **dadurch gekennzeichnet, dass** die Klebstoffschicht eine Schichtdicke aufweist, die das zweifache bis fünffache der Dicke des applizierten ungeschäumten Klebstoffes beträgt.

6. Verpackungsmaterial nach Anspruch 5, **dadurch gekennzeichnet, dass** als Reaktionsklebstoff ein Einkomponenten-Reaktionsharzklebstoff verwendet wird, der bei Zutritt von Luftfeuchtigkeit auspolymerisiert.

7. Verpackungsmaterial nach einem der Ansprüche 1 bis 5, **dadurch gekennzeichnet, dass** als Reaktionsklebstoff ein lösungsmittelfreier PUR-Klebstoff auf Basis aliphatischer oder aromatischer Isocyanate verwendet wird.

8. Verpackungsmaterial nach einem der Ansprüche 1 bis 5, **dadurch gekennzeichnet, dass** als Reaktionsklebstoff ein Zweikomponenten-Reaktionsharzklebstoff verwendet wird.

9. Verpackungsmaterial nach einem der Ansprüche 1 bis 8, **dadurch gekennzeichnet, dass** die Klebstoffschicht mit einem Auftragsgewicht von 1 g/m² bis 10 g/m², vorzugsweise mit einem Auftragsgewicht von 2 g/m² bis 6 g/m², appliziert ist.

10. Verpackungsmaterial nach einem der Ansprüche 1 bis 9, **dadurch gekennzeichnet, dass** der Korrosionsinhibitor mit dem Reaktionsklebstoff gleichmäßig vermischt ist.

11. Verpackungsmaterial nach einem der Ansprüche 1 bis 10, **dadurch gekennzeichnet, dass** die Kunststofffolie und die innenseitige Schicht durch einen gleichmäßigen Auftrag der Klebstoffschicht flächig miteinander verklebt sind.

12. Verpackungsmaterial nach einem der Ansprüche 1 bis 10, **dadurch gekennzeichnet, dass** die Klebstoffschicht ein Muster aus Klebeflächen oder klebstofffreien Flächen bildet.

13. Verpackungsmaterial nach einem der Ansprüche 1 bis 12, **dadurch gekennzeichnet, dass** die Kunststofffolie aus einem Polymer besteht, welches eine Barriere gegen eine Migration des Korrosionsinhibitors bildet.

14. Verpackungsmaterial nach einem der Ansprüche 1 bis 13, **dadurch gekennzeichnet, dass** die Kunststofffolie aus Polyolefin oder einem Polyolefin-Copolymer besteht.

15. Verpackungsmaterial nach einem der Ansprüche 1 bis 12, **dadurch gekennzeichnet, dass** die Kunststofffolie mehrschichtig ausgebildet ist und eine Sperrschicht mit einem hohen Diffusionswiderstand für den Korrosionsinhibitor aufweist.

16. Verpackungsmaterial nach einem der Ansprüche 1 bis 15, **dadurch gekennzeichnet, dass** die Kunststofffolie eine Dicke zwischen 10 und 120 µm, vorzugsweise eine Dicke zwischen 20 und 50 µm aufweist.

17. Verpackungsmaterial nach einem der Ansprüche 1 bis 16, **dadurch gekennzeichnet, dass** die der Klebstoffschicht zugewandte Seite der Kunststofffolie eine durch eine Vorbehandlung, insbesondere Corona-Vorbehandlung, modifizierte Oberflächenstruktur zur Verbesserung der Klebstoffhaftung aufweist.

18. Verpackungsmaterial nach einem der Ansprüche 1 bis 17, **dadurch gekennzeichnet, dass** die textile Schicht aus einem Vliesstoff aus Polymerfasern besteht.

19. Verpackungsmaterial nach Anspruch 18, **dadurch gekennzeichnet, dass** der Vliesstoff ein Spinnvlies, ein Meltblownvlies oder eine Kombination aus Spinnvlies und Meltblownvlies ist.

20. Verpackungsmaterial nach einem der Ansprüche 1 bis 17, **dadurch gekennzeichnet, dass** die textile Schicht aus einem Gewebe, Gewirke oder Gestricke besteht.

21. Verpackungsmaterial nach einem der Ansprüche 1 bis 20, **dadurch gekennzeichnet, dass** die Gesamtdicke zwischen 70 µm und 200 µm, vorzugsweise zwischen 80 µm und 150 µm liegt.

## Claims

1. A packaging material for corrosion-susceptible items made from metal, consisting of a plastic film forming the outside of the packaging, a textile inside layer and an adhesive layer connecting the plastic film with the inside layer, wherein the adhesive layer contains a volatile corrosion inhibitor and wherein the inside layer, in contrast to the plastic film on the outside of the packaging, exhibits a high degree of permeability for the corrosion inhibitor, **characterised in that** the adhesive layer is formed of a chemically reacting adhesive, wherein the surface of the adhesive layer is enlarged by a multitude of gas bubbles and/or wherein a surface of the adhesive layer effective in emitting the corrosion inhibitor is enlarged due to the fibres of the inside layer partially penetrating into the surface of the adhesive layer with capillary forces being responsible for pulling adhesive up individual fibres, and **in that** the corrosion inhibitor is contained in a quantity of between 0,1 g/m² and 5 g/m² relative to the area of the packaging material in the adhesive layer.

2. The packaging material according to claim 1, **characterised in that** the diameter of the gas bubbles lies in the micrometre to nanometre range.

3. The packaging material according to claim 1 or 2, **characterised in that** the gas bubbles have been created by a chemical reaction including gas formation during hardening of the adhesive.

4. The packaging material according to one of claims 1 to 3, **characterised in that** the structure of the hardened adhesive is comparable to a foamed plastic.

5. The packaging material according to claim 4, **characterised in that** the adhesive layer has a layer thickness which is from twice to five times as thick as the applied unfoamed adhesive material.

6. The packaging material according to claim 5, **characterised in that** the reactive adhesive used is a one-component reactive resin adhesive which polymerises during admission of air humidity.

7. The packaging material according to one of claims 1 to 5, **characterised in that** the reactive adhesive used is a solvent-free PUR adhesive based on aliphatic or aromatic isocyanates.

8. The packaging material according to one of claims 1 to 5, **characterised in that** the reactive adhesive used is a two-component reactive resin adhesive.

9. The packaging material according to one of claims 1 to 8, **characterised in that** the adhesive layer is applied with a coating weight of between 1 g/m² and 10 g/m², preferably a coating weight of between 2 g/m² and 6 g/m².

10. The packaging material according to one of claims 1 to 9, **characterised in that** the corrosion inhibitor is evenly mixed with the reactive adhesive.

11. The packaging material according to one of claims 1 to 10, **characterised in that** the plastic film and the inside layer are flatly bonded to each other by an even application of the adhesive layer.

12. The packaging material according to one of claims 1 to 10, **characterised in that** the adhesive layer forms a pattern of adhesive areas or adhesive-free areas.

13. The packaging material according to one of claims 1 to 12, **characterised in that** the plastic film consists of a polymer which forms a barrier against a migration of the corrosion inhibitor.

14. The packaging material according to one of claims 1 to 13, **characterised in that** the plastic film consists of polyolefin or a polyolefin-copolymer.

15. The packaging material according to one of claims 1 to 12, **characterised in that** the plastic film is formed of a multilayer film and includes a barrier layer with a high diffusion resistance for the corrosion inhibitor.

16. The packaging material according to one of claims 1 to 15, **characterised in that** the plastic film has a thickness of between 10 and 120 µm, preferably a thickness of between 20 and 50 µm.

17. The packaging material according to one of claims 1 to 16, **characterised in that** the side of the plastic film facing the adhesive layer comprises a surface structure modified by a pre-treatment, in particular a corona pre-treatment in order to improve adhesion of the adhesive.

18. The packaging material according to one of claims 1 to 17, **characterised in that** the textile layer consists of a fleece material composed of polymer fibres.

19. The packaging material according to claim 18, **characterised in that** the fleece material may be a spun fleece, a meltblown fleece or a combination of spun fleece and meltblown fleece.

20. The packaging material according to one of claims 1 to 17, **characterised in that** the textile layer may consist of a woven, crocheted or knitted fabric.

21. The packaging material according to one of claims 1 to 20, **characterised in that** the overall thickness lies between 7 µm and 200 µm, preferably between 80 µm and 150 µm.

## Revendications

1. Matière d'emballage pour des objets métalliques exposés à la corrosion, constituée d'un film en matière plastique formant la face extérieure de l'emballage, d'une couche textile sur la face intérieure et d'une couche de matière adhésive reliant le film en matière plastique avec la couche sur la face intérieure, la couche de matière adhésive contenant un inhibiteur volatil de corrosion et la couche sur la face intérieure faisant preuve, en comparaison du film en matière plastique sur la face extérieure de l'emballage d'une perméabilité élevée à l'inhibiteur de corrosion, **caractérisée en ce que** la couche de matière adhésive est formée d'un mélange d'adhésif réactif à prise chimique, la surface de la couche de matière adhésive étant agrandie par une pluralité de bulles de gaz et/ou une couche de matière adhésive active pour la distribution de l'inhibiteur de corrosion étant agrandie **en ce que** les fibres de la couche intérieure pénètrent en partie dans la surface de la couche de matière adhésive et de la matière adhésive remonte le long de fibres individuelles suite à des forces capillaires et **en ce que** l'inhibiteur de corrosion est contenu dans la couche de matière adhésive dans une quantité comprise entre 0,1 g/m² à 5 g/m² en rapport à la surface de la matière d'emballage.

2. Matière d'emballage selon la revendication 1, **caractérisée en ce que** les bulles de gaz présentent un diamètre de l'ordre des micromètres à l'ordre des nanomètres.

3. Matière d'emballage selon la revendication 1 ou 2, **caractérisée en ce que** les bulles de gaz ont été créées par une réaction chimique avec formation de gaz lors du durcissement de la matière adhésive.

4. Matière d'emballage selon l'une quelconque des revendications 1 à 3, **caractérisée en ce que** la structure de la matière adhésive durcie ressemble à une matière plastique expansée.

5. Matière d'emballage selon la revendication 4, **caractérisée en ce que** la couche de matière adhésive présente une épaisseur de couche qui correspond à du double au quadruple de l'épaisseur de la matière adhésive non expansée appliquée.

6. Matière d'emballage selon la revendication 5, **caractérisée en ce qu'**on utilise en tant que matière adhésive réactive un adhésif résineux réactif monocomposant, qui se polymérise à l'entrée d'humidité de l'air.

7. Matière d'emballage selon l'une quelconque des revendications 1 à 5, **caractérisée en ce qu'**on utilise en tant que matière adhésive réactive un adhésif PUR exempt de solvant sur base d'isocyanates aliphatiques ou aromatiques.

8. Matière d'emballage selon l'une quelconque des revendications 1 à 5, **caractérisée en ce qu'**on utilise en tant que matière adhésive réactive un adhésif résineux bicomposants.

9. Matière d'emballage selon l'une quelconque des revendications 1 à 8, **caractérisée en ce que** la couche de matière adhésive est appliquée à raison d'un poids d' application de 1 g/m² à 10 g/m², de préférence à raison d'un poids d'application de 2 g/m² à 6 g/m².

10. Matière d'emballage selon l'une quelconque des revendications 1 à 9, **caractérisée en ce que** l'inhibiteur de corrosion est mélangé de façon homogène avec la matière adhésive réactive.

11. Matière d'emballage selon l'une quelconque des revendications 1 à 10, **caractérisée en ce que** le film en matière plastique et la couche sur la face intérieure sont collés l'un à l'autre à grande surface par une application homogène de la couche de matière adhésive.

12. Matière d'emballage selon l'une quelconque des revendications 1 à 10, **caractérisée en ce que** la couche de matière adhésive forme un motif composé de surfaces de collage et de surfaces exemptes de matière adhésive.

13. Matière d'emballage selon l'une quelconque des revendications 1 à 12, **caractérisée en ce que** le film en matière plastique consiste dans un polymère qui forme une barrière contre une migration de l'inhibiteur de corrosion.

14. Matière d'emballage selon l'une quelconque des revendications 1 à 13, **caractérisée en ce que** la couche de matière adhésive consiste dans une polyoléfine ou dans un copolymère de polyoléfine.

15. Matière d'emballage selon l'une quelconque des revendications 1 à 12, **caractérisée en ce que** le film en matière plastique est conçu à couches multiples et comporte une couche de barrage avec une résistance élevée à la diffusion pour l'inhibiteur de corrosion.

16. Matière d'emballage selon l'une quelconque des revendications 1 à 15, **caractérisée en ce que** le film en matière plastique présente une épaisseur comprise entre 10 et 120 µm, de préférence, une épaisseur comprise entre 20 et 50 µm.

17. Matière d'emballage selon l'une quelconque des revendications 1 à 16, **caractérisée en ce que** le côté du film de matière plastique qui fait face à la couche de matière adhésive présente une structure superficielle modifiée par prétraitement, notamment par prétraitement Corona, pour l'amélioration de l'adhérence de la matière adhésive.

18. Matière d'emballage selon l'une quelconque des revendications 1 à 17, **caractérisée en ce que** la couche textile consiste dans un voile en fibres polymères.

19. Matière d'emballage selon la revendication 18, **caractérisée en ce que** le voile est un non-tissé, un voile meltblown ou une association de non-tissé et de voile meltblown.

20. Matière d'emballage selon l'une quelconque des revendications 1 à 17, **caractérisée en ce que** la couche de matière adhésive consiste dans un tissu, un maillage ou un tricotage.

21. Matière d'emballage selon l'une quelconque des revendications 1 à 20, **caractérisée en ce que** l'épaisseur totale se situe entre 70 µm et 200 µm, de préférence entre 80 µm et 150 µm.
